# EUROPEAN PATENT APPLICATION

(11) **EP 2 014 629 A2**
(43) Date of publication of application: **14.01.2009**
(21) Application number: 08158688.5
(22) Date of filing: 20.06.2008
(51) Int. Cl.: C04B 41/86, C03C 8/14

(54) **Materials for coating ceramic bodies, preparation and use thereof and ceramic bodies including the same**

(30) Priority: 22.06.2007 IT MI20070139
(71) Applicant: Colorobbia Italia S.p.a., 50053 Sovigliana Vinci (IT)
(72) Inventor: Montanari, Gabriele, 50025, Montespertoli (IT); Bitossi, Marco, 50056, Montelupo Fiorentino (IT)
(74) Representative: Gervasi, Gemma

(57) **Abstract**

A series of materials which may be applied as a surface coating film on double-firing, monoporosa, single-firing and porcelain stoneware objects, sanitary fittings and artistic ceramics is described.

These materials may be in the form of powder, in a vehicled suspension, in a granular, atomized, sintered, pelletted form and in other forms, in the most appropriate granulometric conditions.

## Description

### Field of the invention

The invention relates to ceramic materials to be used as coating films for ceramic products manufactured by the techniques of double-firing, monoporosa, single-firing, porcelain stoneware, sanitary fittings and artistic ceramics.

### State of the art

As known in the ceramic industry, vitrifiable compositions are especially important since, depending on the formulation and application, they diversify the finished ceramic product compared to the raw product which is only formed by the base or mix. This diversification allows to add to the raw product both aesthetical value through colour, different reflection to light, etc. and technical value, decreasing the dirtability, increasing the resistance to chemical agents and to abrasion. These compositions vitrify in virtue of the presence in the formulation of already premanufactured glasses (frits) or raw materials that, by being cast together at the firing temperature of the product, may form a glass matrix in which dispersed crystalline compounds may or may not be found. Even not completely vitrified ceramic compositions reach sintering and therefore compactness through binding glass phases. Specifically, it is known that some metal oxides (titanium, zinc, wolfram, molybdenum oxide) may induce crystallization in the vitrifiable compositions in specific thermal conditions.

An exception to the above said consists in metal alloys in the form of powder, atomized product and the like, which, when applied to a ceramic body, melt at an appropriate temperature thus creating a coating in which a glass phase is not necessarily present (see for instance patent application PCT/EP2006/063509).

A further exception consists in ceramic coatings based on noble metals used in third or fourth firing on already fired ceramic coatings.

All the above said materials are applied by different techniques such as plate, bell, dry application (during the pressing step of the base or later), serigraphy, silicone roller technique and others.

Similar compositions are disclosed in the parallel patent application FI2007A000061 (in the name of the same Applicant), in which the glass phase is however missing and cobalt oxide is present.

The glass compositions may lend to the surface of the product a glossy, matt, crystallized, multi-shaded, coloured appearance, etc.

The metal compositions (based on alloy powders) lend to the product a metal surface which, as such, may be oxidized, smoothed, polished, satin-finished, etc.

As may be appreciated from the above, the material range available in the art to decorate and improve the technical properties of the ceramic bodies is broad, however the continuous developments of the technology in this sector and especially the market needs push towards the production of more and more innovative compositions allowing to give specific technical and aesthetical features to the finished ceramic body.

### Detailed description of the invention

The present invention allows to meet the above said needs providing the ceramist with a new range of materials for coating ceramic bodies, which have innovative features in aesthetical and technical terms and specifically macro and micro crystallized metal surfaces in which a glass phase which has been introduced or induced is present, which combine the aesthetical metal appearance with the crystalline appearance in the same context.

Furthermore, the present invention allows to obtain materials for coating ceramic bodies with a homogeneous and controlled crystallization even on large surfaces. On one hand, the present invention also allows to improve the resistance to chemical attacks and, on the other hand, to broaden the variety of available macro-crystalline forms: acicular, fibrous, granular, etc.

According to the invention, the expression "ceramic bodies" indicates all clay bodies and other siliceous or non-siliceous materials such as for instance feldspars, quartz, kaolin, etc, used for the production of ceramic objects in double-firing, monoporosa, single-firing, porcelain stoneware, sanitary fittings and artistic ceramics, and suitable for the application of coating materials defined hereinafter, for instance tiles, table accessories, sanitary fittings and decorative ceramics.

According to the invention, the expression "materials for coating ceramic bodies" indicates: glazes, ceramic colours, atomized, sintered, pelletted and granulated products, serigraphy or silicone roller application glazes, glazes for dry applications both before and during the base pressing, provided dry and/or vehicled, in the most various granulometries appropriate for each specific case. The materials for coating ceramic bodies according to the present invention include wolfram oxide (also designated as tungsten oxide) and manganese oxide, each of which is in all stable oxidation states possibly in a mixture with copper and zinc oxides.

As well as the above said oxides, the materials according to the present invention may also contain other oxides selected from those commonly employed for the production of materials for coating ceramic bodies as defined above, for instance silicon, boron, lead and aluminium oxide etc., both as such and as glasses, frits or natural clay materials based on the same, such as clays, kaolin, bentonite, etc. and all of the chromophore oxides (for instance: copper oxide, chromium oxide, iron oxide, etc.)

Furthermore, traditional ceramic pigments (stains) may also be used to modify the final colour of the composition.

If desired, the materials according to the invention may-also contain metal alloy powders which promote the fusion and consolidate the metal appearance without however taking part in the crystallization and without adding any additional technical or visual feature.

As the specific weights of the two oxides crucial for the invention are very high, to confer processability to the system and therefore a good behaviour during the processes of coating the ceramic body with this kind of formulations, it is preferable to add organic products (glues, plasticizers, suspensive agents, etc.) or inorganic products (clays, bentonite, kaolin, etc.) or both so that they confer rheological features, such as for instance plasticity and suspensive ability, in the various mixing vehicles.

Preferably, according to the invention, the above indicated oxides are present in the following intervals indicated as weight percentages calculated with respect to the total weight of the material:

| | |
|---|---|
| Wolfram oxide: | 20 - 80% |
| Manganese oxide: | 2 - 20% |
| Glass and clay portion | 20-40% |

and other oxides and pigments, if present, are preferably in an amount in the range between 5 and 30%.

Preferably, the materials according to the invention have the following composition:

| | |
|---|---|
| Wolfram oxide: | 30 - 60% |
| Manganese oxide: | 5 - 25% |
| Other oxides: | 30 - 50% |
| Pigments (stains): | 5- 20% |

Applied to ceramics, the materials according to the present invention allow the creation-of-crystallized metal or metal compositions. Specifically, solid mixture alloys are formed from oxides instead of metals and without the aid of inert and controlled atmospheres as in the case of the oxide alloys in metallurgy.

Furthermore, it is possible to adjust the shape and-size of the crystals especially in two ways:
a) increasing the percentage of wolfram oxide; indeed, when wolfram oxide is in an amount lower than 40% in the formulation, a micro-crystallization occurs, which is not visible or not properly visible by the naked eye, whereas for increasing amounts of wolfram oxide up to the maximum limit previously indicated and complying with the other above disclosed conditions, there is an increase in the length of the acicular crystals of manganese wolfram.
b) the shape of the crystals is especially determined by the amount of glass phase and by the presence of regulator oxides such as: aluminium oxide and zinc oxide.

For the purposes according to the invention, the above said crystallized metal compositions may be dry or wet applied on the surface of the ceramic body creating the desired decoration by means of an appropriate mechanical system. The ceramic body will then be subjected to the usual operations of drying and firing, at temperatures and for the times and cycles which are normally required.

The above said mixtures may be prepared by adding the two metal oxides to other organic and inorganic materials in a dry mixer or in another machine suitable for the type of material to be mixed, until it is homogenised; or otherwise by wet grinding them in traditional ball mills until the desired granulometry is achieved depending on the application the product is intended for. The mixture obtained in this manner is applied to the ceramic body and this is then subjected to firing at the normal temperatures and for the required times and cycles.

These acicular crystals may reach and exceed the length of one centimetre with different although repeatable angles and repeated on the whole glazed surface of the ceramic object. The crystals of manganese wolframate often feature surface enrichments of zirconium oxide crystals which are also found in the matrix around the-crystals-and mainly derive from pigments (stains).

Unlike the metal coatings obtained by the deposition of metals and alloys, the materials object of the-present invention are not subjected to oxidization when firing the ceramic product.

By underlying and/or overlapping the layers of materials for coating the ceramic bodies according to the state of the art to the materials object of the present invention, chromatic variations of the texture and surface crystallization of the product are obtained, thus achieving a diversification of the base metal and crystalline effect and broadening the range of possible final aesthetical results.

Furthermore, the use of materials according to the invention by serigraphic or silicone roller techniques allows to further diversify the aesthetical offer, with the classical principles of ceramic decoration being applied.

Some examples allowing to better understand and appreciate the present invention are disclosed hereinafter.

### Example 1

Wolfram oxide, manganese oxide, copper oxide, yellow Zr-Pr pigment, clear lead frit, fine plastic clay and CMC glue are mixed in an appropriate intensive mixer. The mixture is introduced in a ball mill of the Alsing type or in a turbo dissolution apparatus with the sufficient amount of water to achieve a weight per litre which is not lower than 2000 g/litre.

The composition of the above said mixture is as follows:

| | |
|---|---|
| Fine white plastic clay | 4% |
| Wolfram oxide: | 50% |
| Manganese oxide: | 15% |
| Black copper oxide | 5% |
| Zr-P pigment | 16% |
| Clear lead frit | 10% |
| CMC glue | 0.3% (calculated on the remaining portion of |
| | composition). |

The glaze is grinded until a residue lower than 1 gram is obtained on a 16,000-mesh sieve.

The finished glaze is therefore bell applied on crude porcelain stoneware tiles, dried to zero moisture content and then fired in a roller oven at a temperature of 1200°C with a cycle of 60 minutes.

The visual result is a metal surface with a green tone with acicular crystals of a lighter colour and greater gloss uniformly-dispersed on the whole surface of the tile.

### Example 2

Wolfram oxide, manganese oxide, Zr-Si-Fe pink pigment, clear non-lead frit, fine plastic clay and CMC glue are mixed in an appropriate intensive mixer. The mixture is introduced in a ball mill of the Alsing type or in a turbo dissolution apparatus with the sufficient amount of water to achieve a weight per litre which is not lower than 1850 g/litre.

The composition of the above said mixture is as follows:

| | |
|---|---|
| Fine white plastic clay | 2% |
| Wolfram oxide: | 50% |
| Manganese oxide: | 12% |
| Zinc oxide | 10% |
| Clear non-lead frit | 20% |
| Zr-P pigment | 6% |
| CMC glue | 0.3% (calculated on the remaining portion of composition). |

The glaze is grinded until a residue lower than 1 gram is obtained on a 16,000 mesh-sieve. The glaze prepared in this manner is then wet atomized with a 0.05-0.60 mm granulometry and residual 6-7% moisture content.

This atomized product used in double-feeding on a porcelain stoneware base allows to obtain a pink-brown metallized metal surface after firing at 1200°C for about 60 minutes in a roller oven.

### Example 3

Wolfram oxide, manganese oxide, copper oxide and fine plastic clay are mixed in an appropriate intensive mixer.

The composition of the above said mixture is as follows:

| | |
|---|---|
| Fine white plastic clay | 5% |
| Wolfram oxide: | 60% |
| Manganese oxide: | 15% |
| Black copper oxide | 12% |
| Aluminium oxide | 8% |

The mixture is introduced in a rotating plate granulator together with an amount of water sufficient to form spheres with a diameter varying-between 1 and 5 mm. These spheres are then calcinated at a temperature of 900°C over 60 minutes in a rapid single channel furnace. The spheres are then crushed and sieved with vibrating sieves to obtain a pellet having a 0.5-2,0 mm size. This pellet which is dry applied on a single-fired crude base which is engobed and glazed with a dry matt glaze, is fired at a single-firing temperature and cycle, i.e. 1170°C over 50 minutes. The result after firing is a tile having a dry matt surface which is stained with a black crystallized metal glaze.

## Claims

1. Materials for coating ceramic bodies including wolfram oxide and manganese oxide, each of which in all stable oxidation states, possibly in a mixture with copper and zinc oxides.

2. Materials according to claim 1 selected from the group consisting of: glazes, ceramic colours, atomized, sintered, pelletted and granulated products, serigraphy or silicone roller application glazes, glazes for dry applications before, during or after pressing the base, which are provided dry and/or vehicled and in any granulometry.

3. Materials according to claim 2 further including oxides selected among those commonly employed for the production of coating materials for ceramic bodies, pigments, metal alloys, compounds capable of modifying the rheological properties of the material.

4. Materials according to claim 3, wherein said oxides are selected among: silicon, boron, lead and aluminium oxide, both as such and as glasses, frits or natural clay materials based thereon, chromophore oxides; the pigments are traditional ceramic pigments, and the compounds capable of modifying the rheological properties of the material are organic products selected among: glues, plasticizers, suspensive agents or inorganic products selected among clays, bentonite, kaolin or both.

5. Materials according to claim 4, wherein said oxides are present in the following ranges indicated as a weight percentage calculated with respect to the total weight of the material:
| | |
|---|---|
| Wolfram oxide | 20-80% |
| Manganese oxide | 2-20% |
| Glass and clay portion | 20-40% |
and other oxides and pigments, if present, are preferably in an amount in the range between 5 and 30%.

6. Materials according to claim 5 having the following composition:
| | |
|---|---|
| Wolfram oxide | 30-60% |
| Manganese oxide | 5-25% |
| Other oxides | 30-50% |
| Pigments (stains) | 5- 20% |

7. Materials according to claims 5-6 having the following composition:
| | |
|---|---|
| a) Fine white plastic clay | 4% |
| Wolfram oxide: | 50% |
| Manganese oxide: | 15% |
| Black copper oxide | 5% |
| Zr-P pigment | 16% |
| ... Clear lead frit- | 10% |
| CMC glue | 0.3% (calculated on the remaining portion of composition) |
| b) Fine white plastic clay | 2% |
| Wolfram oxide | 50% |
| Manganese oxide | 12% |
| Zinc oxide | 10% |
| Clear non-lead frit | 20% |
| Zr-P pigment | 6% |
| CMC glue | 0.3% (calculated on the remaining portion of composition) |
| c) Fine white plastic clay | 5% |
| Wolfram oxide | 60% |
| Manganese oxide | 15% |
| Black copper oxide | 12% |
| ...Aluminium oxide | 8% |

8. A process for the preparation of the materials according to claims 1-9, wherein the three crucial metal oxides and the other possibly desired oxides together with other organic and inorganic materials are treated in a dry mixer until they are homogenised; or they are wet grinded in traditional ball mills to the desired granulometry.

9. Ceramic bodies coated with materials according to claims 1-8.

10. Ceramic bodies according to claim 9, wherein the materials according to claims 1-7 are applied to the ceramic body and then this is subjected to firing at the normal temperatures and for the required times and cycles and the final product is possibly smoothed, lapped or polished according to known methods.

11. Ceramic bodies according to claim 10 including manganese wolframate crystals possibly with surface enrichments of zirconium oxide crystals which are also present in the matrix around the crystals.

12. Ceramic bodies coated with materials according to claim 7.

13. Ceramic bodies according to claim 12, wherein the materials according to claim 7 are applied to the ceramic body and then this is subjected to firing at the normal temperatures and for the required times and cycles and the final product is possibly smoothed, lapped or polished according to known methods.

14. Ceramic bodies according to claim 13 having a non-crystallized metal surface.

15. Ceramic bodies according to claims 9-14, wherein said ceramic bodies are: tiles, table accessories, sanitary fittings-and decorative ceramics.

16. Ceramic bodies according to claim 15, wherein the materials according to claims 1-7 are underlaid and/or overlapped to materials for the coating of known ceramic bodies.

17. Ceramic bodies according to claims 9-16, wherein the materials according to claims 1-7 are applied to the ceramic body with the serigraphic or the silicone roller techniques.
